# EUROPEAN PATENT APPLICATION

(11) **EP 2 403 158 A1**
(43) Date of publication of application: **04.01.2012**
(21) Application number: 10746029.7
(22) Date of filing: 06.01.2010
(51) Int. Cl.: H04B 7/10, H04W 16/28, H04W 84/12

(54) **COMMUNICATION DEVICE, COMMUNICATION METHOD, COMPUTER PROGRAM, AND COMMUNICATION SYSTEM**

(30) Priority: 25.02.2009 JP 2009043122
(71) Applicant: Sony Corporation, Tokyo 108-0075 (JP)
(72) Inventor: MORIOKA, Yuichi, Tokyo 108-0075 (JP); TAKANO, Hiroaki, Tokyo 108-0075 (JP); KUNIHIRO, Takushi, Tokyo 108-0075 (JP)
(74) Representative: Körber, Martin Hans
(86) International application number: PCT/JP2010/050052
(87) International publication number: WO 2010/098147

(57) **Abstract**

The directivity of an antenna is efficiently trained between a transmitter and a receiver, and the training results are efficiently fed back from the receiver to the transmitter.

In the case where the order of transmit beam patterns corresponding to individual time slots in a beam training signal, and the names representing the respective transmit beam patterns have already been shared through pre-setting or pre-negotiation between the transmission and reception, the receiving end can estimate received power for each time slot on the basis of transition of the received power of the beam training signal, and writes the transmit beam pattern name or time slot number corresponding to the time slot that realizes the maximum received power, in a notification signal for feedback.

## Description

### Technical Field

The present invention relates to a communication apparatus and a communication method, a computer program, and a communication system which perform radio communication by using millimeter waves, for example, in particular, a communication apparatus and a communication method, a computer program, and a communication system which extend the communication distance of millimeter waves by directing the beam of a directional antenna in the direction in which the communicating party is positioned.

### Background Art

Radio communication called "millimeter wave" can realize higher communication speed by use of high frequency electromagnetic waves. The main uses of millimeter-wave communication include short distance radio access communications, image transmission systems, simplicity radios, and automotive anti-collision radars. Also, at present, technological developments on millimeter-wave communication aimed at promoting its usage are underway, such as realization of large-capacity/long-distance transmission, downsizing of radio apparatus, and reduced cost. Here, the wavelength of millimeter waves is 10 mm to 1 mm, which corresponds to 30 GHz to 300 GHz in terms of frequency. For example, in the case of radio communication using the 60-GHz band, since channels can be allocated in GHz units, very high speed data communication can be performed.

Even compared with microwaves which are in widespread use in the wireless LAN (Local Area Network) technology or the like, millimeter waves are short in wavelength and exhibit high rectilinearity, and can transmit a very large volume of information. On the other hand, since millimeter waves are prone to severe attenuation due to reflection, the radio paths over which to perform communication are mainly direct waves, or reflected waves that are reflected once at most. Also, millimeter waves have such property that the radio signal does not reach far due to large propagation loss.

To compensate for this flight distance problem of millimeter waves, one conceivable method is to impart the antennas of a transmitter and a receiver with directivity, and direct their transmit beam and receive beam in the direction in which the communicating party is positioned to thereby extend the communication distance. The beam directivity can be controlled by, for example, providing each of the transmitter and receiver with a plurality of antennas, and varying the transmit weight or receive weight for each of the antennas. Since reflected waves are rarely used and direct waves become important for millimeter waves, a beam-shaped directivity is suitable, and it is conceivable to use a sharp beam as the directivity. Then, millimeter-wave radio communication may be performed after training of the optimal antenna directivity.

For example, there has been proposed a radio transmission system in which, after the direction of the transmit antenna is determined by transmitting a signal for determining the direction of directivity of the transmit antenna by a second communication means using communication based on one of power line communication, optical communication, and acoustic communication, radio communication between the transmitter and the receiver is performed by a first communication means using radio waves of 10 GHz or more (see, for example, PTL 1).

Also, a method of extending the communication distance by using the directivity of an antenna is also applied to IEEE802.15.3c, which is the standard specification of wireless PAN (mmWPAN: millimeter-wave Wireless Personal Area Network) using the millimeter-wave band.

In the related art, as a technique for training of the optimal directivity of an antenna, a common method is to vary the directivity of the antenna at the transmitting end at every transmission/reception of a single frame, and determine an optimal directivity at the receiving end in accordance with the results of frame reception. In this case, since as many training frames as the number of directional beam patterns need to be exchanged between the transmitter and the receiver, there is a problem in that the time required for training becomes overhead, leading to a decrease in throughput. Also, it is considered preferable to feed back the training results efficiently from the receiving end to the transmitting end.

### Citation List

### Patent Literature

PTL 1: Japanese Patent No. 3544891

### Summary of Invention

### Technical Problem

An object of the present invention resides in providing superior communication apparatus and communication method, computer program, and communication system, which can extend the communication distance of millimeter waves by directing the beam of a directional antenna in the direction in which the communicating party is positioned.

A further object of the present invention resides in providing superior communication apparatus and communication method, computer program, and communication system, which make it possible to efficiently perform training of an antenna directivity between a transmitter and a receiver, and efficiently feed back the training results from the receiver to the transmitter. Solution to Problem

The present application has been made in view of the above-mentioned problems, and the invention as defined in Claim 1 is a communication apparatus which operates as a receiving end in a second communication mode, including:
a first radio communication section that performs radio communication in accordance with a first communication mode;
a second radio communication section that performs radio communication in accordance with the second communication mode using a frequency band higher than the first communication mode;
a power calculating section that calculates a received power when receiving a beam training signal transmitted from a transmitting end including a plurality of transmit beam patterns in the second communication mode, the beam training signal separably including a plurality of training signal sequences for each of the transmit beam patterns by means of time division multiplexing, code division multiplexing, or the like; and
a determining section that determines feedback information for identifying an optimal transmit beam pattern at the transmitting end, on a basis of transition of the received power of the beam training signal,
in which the communication apparatus transmits a notification signal including the feedback information from the first radio communication section to the transmitting end in accordance with the first communication mode.

Also, according to the invention as defined in Claim 2 of the present application, the communication apparatus as defined in Claim 1 is configured to start reception of the beam training signal by the second radio communication section at a reception start timing that is determined on a basis of reception of an instruction signal, which instructs training of a beam directivity, by the first radio communication section from the transmitting end.

Also, according to the invention as defined in Claim 3 of the present application, in a case where a method of separably including the training signal sequences for each of the transmit beam patterns when transmitting the beam training signal is known, the communication apparatus as defined in Claim 1 is configured such that the determining section calculates a received power for each of the plurality of training signal sequences, estimates an optimal transmit beam pattern corresponding to a training signal sequence that makes the received power maximum or large, and determines feedback information for identifying the optimal transmit beam pattern, and the communication apparatus transmits a notification signal including the feedback information from the first radio communication section to the transmitting end in accordance with the first communication mode.

Also, according to the invention as defined in Claim 4 of the present application, the communication apparatus as defined in Claim 1 is configured to determine feedback information related to transition of the received power calculated by the power calculating section over a period during which the beam training signal is being received.

Also, according to the invention as defined in Claim 5 of the present application, the communication apparatus as defined in Claim 4 is configured to compress an information volume of the feedback information by acquiring the received power in a quantized manner in a segment in which the beam training signal is received.

Also, according to the invention as defined in Claim 6 of the present application, in a case where the beam training signal is a signal synthesized by spreading the plurality of training signal sequences for each of the transmit beam patterns by using a plurality of spreading codes that form a mutually orthogonal or pseudo-orthogonal relationship, the communication apparatus as defined in Claim 1 is configured such that the communication apparatus extracts each of the plurality of training signal sequences by de-spreading the beam training signal received by the second radio communication section by using each of the plurality of spreading codes, the determining section determines, as feedback information, information for identifying a spreading code corresponding to a training signal sequence that makes the received power calculated by the power calculating section maximum or large, and the communication apparatus transmits a notification signal including the feedback information from the first radio communication section to the transmitting end in accordance with the first communication mode.

Also, according to the invention as defined in Claim 7 of the present application, the second radio communication section of the communication apparatus as defined in Claim 1 is configured to include a plurality of receive beam patterns, estimate an optimal transmit beam pattern that is set at the transmitting end on a basis of the feedback information, set a receive beam pattern that is optimal for the estimated transmit beam pattern, and receive a signal according to the second communication mode from the transmitting end.

Also, the invention as defined in Claim 8 of the present application is a communication method for a communication apparatus including a first radio communication section that performs radio communication in accordance with a first communication mode, and a second radio communication section that performs radio communication in accordance with a second communication mode using a frequency band higher than the first communication mode, the communication method including:
a power calculating step of calculating a received power when receiving a beam training signal transmitted from a transmitting end including a plurality of transmit beam patterns, the beam training signal separably including a plurality of training signal sequences for each of the transmit beam patterns by means of time division multiplexing, code division multiplexing, or the like;
a determining step of determining feedback information for identifying an optimal transmit beam pattern at the transmitting end, on a basis of transition of the received power of the beam training signal; and
a step of transmitting a notification signal including the feedback information from the first radio communication section to the transmitting end in accordance with the first communication mode.

Also, the invention as defined in Claim 9 of the present application is a computer program which is described in a computer-readable format so as to execute, on a computer, communication processing for a communication apparatus including a first radio communication section that performs radio communication in accordance with a first communication mode, and a second radio communication section that performs radio communication in accordance with a second communication mode using a frequency band higher than the first communication mode, the computer causing the computer to function as:
a power calculating section that calculates a received power when receiving a beam training signal transmitted from a transmitting end including a plurality of transmit beam patterns in the second communication mode, the beam training signal separably including a plurality of training signal sequences for each of the transmit beam patterns by means of time division multiplexing, code division multiplexing, or the like;
a determining section that determines feedback information for identifying an optimal transmit beam pattern at the transmitting end, on a basis of transition of the received power of the beam training signal; and
a notification signal transmitting section that transmits a notification signal including the feedback information from the first radio communication section to the transmitting end in accordance with the first communication mode.

The computer program according to Claim 9 of the present application defines a computer program that is described in a computer-readable format so as to implement predetermined processing on a computer. In other words, by installing the computer program according to Claim 9 of the present application to the computer, synergistic operation is exerted on the computer, making it possible to obtain the same operational effect as that of the communication apparatus according to Claim 1 of the present application.

Also, the invention as defined in Claim 10 of the present application is a communication system including:
a transmitting-end communication apparatus for a second communication mode, including a first radio communication section that performs radio communication in accordance with a first communication mode, and a second radio communication section including a plurality of transmit beam patterns and capable of performing directional radio communication in accordance with the second communication mode using a frequency band higher than the first communication mode; and
a receiving-end communication apparatus for the second communication mode, including a first radio communication section that performs radio communication in accordance with the first communication mode, and a second radio communication section that performs radio communication in accordance with the second communication mode using the frequency band higher than the first communication mode,
in which the transmitting-end communication apparatus transmits an instruction signal instructing training of a beam directivity in accordance with the first communication mode, and transmits a beam training signal in accordance with the second communication mode, the beam training signal separably including a plurality of training signal sequences for each of the transmit beam patterns by means of time division multiplexing, code division multiplexing, or the like, and
the receiving-end communication apparatus starts reception of the beam training signal at a reception start timing that is determined on a basis of reception of the instruction signal, calculates a received power of the beam training signal, determines feedback information for identifying an optimal transmit beam pattern at the transmitting-end communication apparatus on a basis of transition of the received power, and transmits a notification signal including the feedback information to the transmitting end in accordance with the first communication mode.

It should be noted, however, that the term "system" as used herein refers to a logical aggregation of a plurality of devices (or functional modules that implement specific functions), and it does not particularly matter whether or not the individual devices or functional modules exist within the same casing.

### Advantageous Effects of Invention

According to the present invention, it is possible to provide superior communication apparatus and communication method, computer program, and communication system, which can extend the communication distance of millimeter waves by directing the beam of a directional antenna in the direction in which the communicating party is positioned.

Also, according to the present invention, it is possible to provide superior communication apparatus and communication method, computer program, and communication system, which make it possible to efficiently perform training of an antenna directivity between a transmitter and a receiver, and efficiently feed back the training results from the receiver to the transmitter.

According to each of the inventions as defined in Claims 1, 8, 9, and 10 of the present application, in a communication system which uses communication according to a first communication mode that is free from the flight distance problem when establishing the directivity of a transmit beam at the transmitting end in a second communication mode using a high frequency band such as millimeter waves, by feeding back information related to an optimal transmit beam pattern to the transmitting end from the receiving end, the directional communication path in the second communication mode is secured to solve the flight distance problem, thereby realizing high speed data communication.

According to the invention as defined in Claim 2 of the present application, the communication apparatus that operates as the receiving end in the second communication mode can start reception of the beam training signal by the second radio communication section at a reception start timing, which is determined on the basis of reception of an instruction signal instructing training of a beam directivity by the first radio communication section from the transmitting end. Therefore, the header section can be omitted from the beam training signal transmitted in accordance with the second communication mode.

According to the invention as defined in Claim 3 of the present application, in the case where the method of multiplexing the training signal sequences for each of the transmit beam patterns when transmitting the beam training signal has been shared between the transmission and reception in the second communication mode, the communication apparatus that operates as the receiving end in the second communication mode can estimate an optimal transmit beam pattern corresponding to the training signal sequence that makes the received power maximum or large, and determine feedback information for identifying the optimal transmit beam pattern.

According to the invention as defined in Claim 4 of the present application, the communication apparatus that operates as the receiving end in the second communication mode feeds back transition of received power over the entire segment in which the beam training signal is received. It is thus possible for the transmitting end to work out not only the transmit beam pattern that realizes the maximum received power but also the beam pattern that provides an effective reflected wave. As a result, when transmitting data frames in the second communication mode, it is possible for the transmitting end to take flexible actions, such as setting not only a single beam pattern that maximizes the received power but also a plurality of beam patterns that provide large received powers as candidates. Also, according to the invention as defined in Claim 5 of the present application, the information volume of feedback information can be compressed by quantizing the received power in a segment in which the beam training signal is received.

According to the invention as defined in Claim 6 of the present application, by using the format of a beam training signal in which a plurality of training signal sequences are multiplexed by code division, the data length of the beam training signal can be shortened in comparison to the case of performing multiplexing by time division.

According to the invention as defined in Claim 7 of the present application, the communication apparatus that operates as the receiving end in the second communication mode estimates an optimal transmit beam pattern that is presumed to be set at the transmitting end on the basis of feedback information, and sets a receive beam pattern that is optimal for this optimal transmit pattern. Thus, it is possible to secure a more robust directional communication path for the second communication mode, thereby solving the flight distance problem in the second communication mode and realizing high speed data communication.

Other objects, features, and advantages of the present invention will become apparent from the following detailed description of embodiments of the present invention and the accompanying drawings.

### Brief Description of Drawings

[Fig. 1] Fig. 1 is a diagram schematically showing an example of the configuration of a millimeter-wave radio communication system according to an embodiment of the present invention.
[Fig. 2] Fig. 2 is a diagram showing an example of the configuration of a radio communication apparatus 100 that operates as the transmitting end in the millimeter-wave communication system shown in Fig. 1.
[Fig. 3] Fig. 3 is a diagram showing an example of the internal configuration of a first digital section 130.
[Fig. 4] Fig. 4 is a diagram showing an example of the internal configuration of a second digital section 180.
[Fig. 5] Fig. 5 is a diagram showing an example of beam patterns that can be formed by the radio communication apparatus 100 through directivity control of a transmit beam by a transmit beam processing section 185.
[Fig. 6] Fig. 6 is a diagram showing an example of the signal formats of an instruction signal instructing training of a beam directivity to the communicating party, and a beam training signal used for beam training by the communicating party.
[Fig. 7] Fig. 7 is a diagram showing an example of the configuration of a radio communication apparatus 200 that operates as the receiving end in the millimeter-wave communication system shown in Fig. 1.
[Fig. 8] Fig. 8 is a diagram showing an example of the internal configuration of a first digital section 130.
[Fig. 9] Fig. 9 is a diagram showing an example of the internal configuration of a second digital section 280.
[Fig. 10] Fig. 10 is a diagram showing an example of receive beam patterns that can be formed by the radio communication apparatus 200 through directivity control of a receive beam by a receive beam processing section 282.
[Fig. 11] Fig. 11 is a diagram showing an example of the signal format of a beam training signal, and the manner in which the radio communication apparatus 200 weights a receive signal by 10 different receive beam patterns Bᵣ₀ to Bᵣ₉ in each of small segments ST0 to ST9 obtained by further dividing each of time slots T0 to T9 in ten.
[Fig. 12A] Fig. 12A is a diagram showing an example of a signal transmission/reception sequence performed by using the RTS/CTS mode in the radio communication system shown in Fig. 1.
[Fig. 12B] Fig. 12B is a diagram showing another example of a signal transmission/reception sequence performed by using the RTS/CTS mode in the radio communication system shown in Fig. 1.
[Fig. 13] Fig. 13 is a diagram schematically showing an example of the radio wave propagation condition when the radio communication apparatus 100 is transmitting on each of transmit beam patterns Bₜ₀ to Bₜ₉ from a second radio communication section 170 in accordance with a second communication mode.
[Fig. 14A] Fig. 14A is a diagram showing transition of received power at the radio communication apparatus 200 under the radio wave propagation condition shown in Fig. 13.
[Fig. 14B] Fig. 14B is a diagram showing the manner in which the beam pattern that realizes the maximum received power is worked out from the transition of received power at the radio communication apparatus 200.
[Fig. 14C] Fig. 14C is a diagram showing the manner in which the transition of received power over the entire segment of a beam training signal BTF is extracted in a quantized fashion.
[Fig. 15] Fig. 15 is a diagram showing a format example of the format of the beam training signal BTF obtained by multiplexing training signal sequences associated with each of a plurality of transmit beam patterns by means of code division.
[Fig. 16] Fig. 16 is a flowchart showing a procedure for the radio communication apparatus 200 to feed back information related to an optimal transmit beam pattern to the radio communication apparatus 100.
[Fig. 17] Fig. 17 is a diagram showing an example of the configuration of information equipment incorporating the radio communication apparatus 100 or 200 that is modularized. Description of Embodiments

Hereinbelow, embodiments of the present invention will be described in detail with reference to the drawings.

As has been already described in the Background section, radio communication systems utilizing millimeter waves can enlarge their communication range by using a plurality of transmit and receive antennas to form a sharp antenna directivity (i.e., a beam-shaped antenna directivity). However, although the communication distance can be extended by directing the beam in the direction of the position of the communicating party, when in a phase where the beam has not been directed (e.g., when newly entering a network, or when the relative position with respect to the communicating party has changed due to movement of the terminal or the like), frame synchronization cannot be established, that is, even arrival of a frame cannot be detected.

To perform training of an appropriate beam, one conceivable method is to transmit frames from the transmitting end while varying directivity for every single frame, and assume that a beam pattern with a desired directivity has been used at the transmitted end upon successfully receiving a frame at the receiving end. However, since an appropriate beam is determined by increasing the number of attempts, there is a problem in that the time required for training becomes extremely long, causing an increase in overhead and a decrease in throughput.

Accordingly, in a radio communication system according to an embodiment of the present invention, a second communication mode that uses millimeter waves is used in combination with a first radio that uses microwaves, and under an environment in which an appropriate beam is not directed, a first communication mode that provides a long communication distance is used for the purpose of frame synchronization and, further, transmission of information necessary for training of an appropriate beam of millimeter wave, thereby performing training of an antenna directivity in the second communication mode with reliability and efficiently.

The first communication mode using microwaves does not have high rectilinearity and suffers less attenuation upon reflected in comparison to millimeter waves, thus enabling mutual communication without considering the directivities of the transmit beam and receive beam. In contrast, since the second communication mode uses millimeter waves and thus has high rectilinearity and suffers large attenuation upon reflection, it is preferable to transmit and receive radio signals while directing the transmit beam and the receive beam toward the communicating party.

The following description assumes that the first communication mode is a communication mode using microwave electromagnetic waves (5-GHz band) used in IEEE802.11a/b/g widely adopted as a wireless LAN standard, and that the other second communication mode uses the 60-GHz band used in the VHT (very High Throughput) standard. It should be noted, however, that the scope of the present invention does not necessarily limit the first and second communication modes to specific frequency bands.

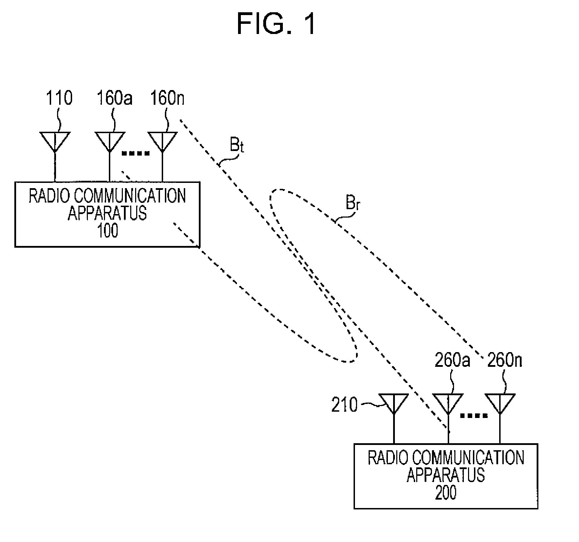

Fig. 1 schematically shows an example of the configuration of a millimeter-wave radio communication system according to an embodiment of the present invention. The radio communication system shown in the drawing includes a radio communication apparatus 100 and a radio communication apparatus 200.

The radio communication apparatus 100 transmits a predetermined signal described later to the radio communication apparatus 200, and starts communication with the radio communication apparatus 200. Also, the radio communication apparatus 200 receives the signal transmitted from the radio communication apparatus 100, and starts communication with the radio communication apparatus 100. In the following, for the convenience of description, the radio communication apparatus 100 that transmits data frames by the second communication mode will be also referred to as "transmitting end", and the radio communication apparatus 200 that receives data frames by the second communication mode will be also referred to as "receiving end".

The radio communication apparatuses 100 and 200 can perform radio communication with each other by using both of the first communication mode and the second communication mode described above. The first communication mode using microwaves does not have high rectilinearity and suffers less attenuation upon reflection in comparison to millimeter waves. Therefore, when performing radio communication in accordance with the first communication mode, the radio communication apparatuses 100 and 200 can communicate with each other without considering the directivities of the transmit beam and receive beam. On the other hand, the second communication mode uses millimeter waves, and thus has high rectilinearity and suffers greater attenuation upon reflection. When performing radio communication in accordance with the second communication mode, it is preferable for the radio communication apparatuses 100 and 200 to each transmit and receive radio signals while directing the transmit beam and the receive beam toward the communicating party.

In the example shown in Fig. 1, the radio communication apparatus 100 includes an antenna 110 for transmitting and receiving a radio signal in accordance with the first communication mode, and a plurality of antennas 160a to 160n for transmitting and receiving radio signals in accordance with the second communication mode. Further, the directivity Bₜ of the transmit beam when performing radio communication in accordance with the second communication mode is controlled by adjusting the weights of the respective signals transmitted via the antennas 160a to 160n. In the example shown in the drawing, the transmit beam Bₜ is directed in the direction of the position of the radio communication apparatus 200 that serves as the communicating party.

Also, the radio communication apparatus 200 includes an antenna 210 for transmitting and receiving a radio signal in accordance with the first communication mode, and a plurality of antennas 260a to 260n for transmitting and receiving radio signals in accordance with the second communication mode. Further, the directivity Bᵣ of the receive beam when performing radio communication in accordance with the second communication mode is controlled by adjusting the weights of the respective signals received via the antennas 260a to 260n. In the example shown in the drawing, the receive beam Bᵣ is directed in the direction of the position of the radio communication apparatus 100 that serves as the communicating party.

It should be noted, however, that the scope of the present invention is not limited to the case in which both the radio communication apparatus 100 at the transmitting end and the radio communication apparatus 200 at the receiving end control beam directivity, but only the radio communication apparatus 100 at the transmitting end may control the directivity of the transmit beam Bₜ.

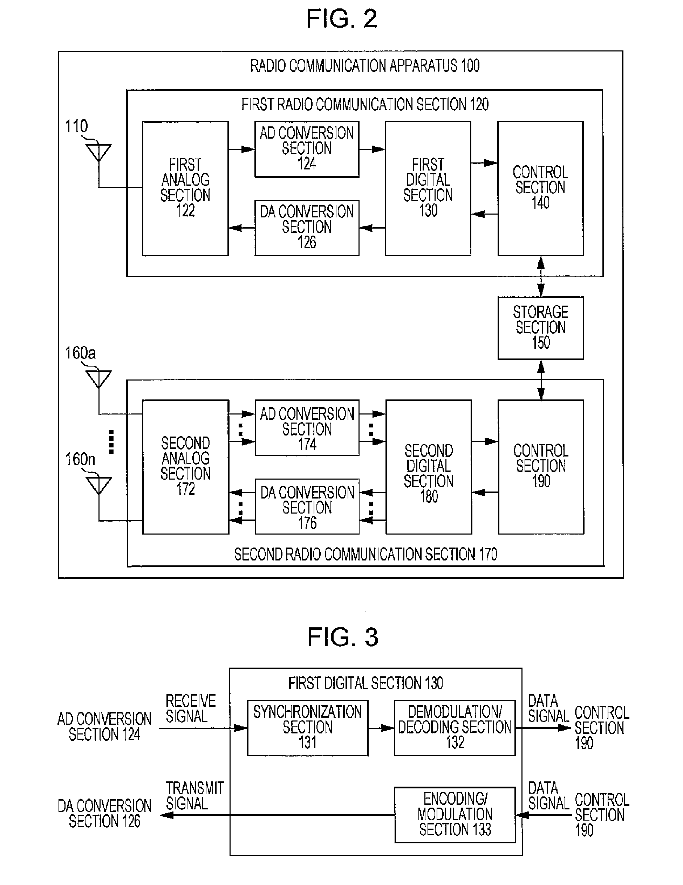

Fig. 2 shows an example of the configuration of the radio communication apparatus 100 that operates as the transmitting end in the millimeter-wave communication system shown in Fig. 1. The radio communication apparatus 100 shown in the drawing may operate as a broadband router or a wireless access point.

The radio communication apparatus 100 includes the antenna 110, a first radio communication section 120, a storage section 150, the plurality of antennas 160a to 160n, and a second radio communication section 170. The first radio communication section 120 includes a first analog section 122, an AD (Analog-to-Digital) conversion section 124, a DA (Digital-to-Analog) conversion section 126, a first digital section 130, and a control section 140. Also, the second radio communication section 170 includes a second analog section 172, an AD conversion section 174, a DA conversion section 176, a second digital section 180, and a control section 190.

The antenna 110 is an antenna used for radio communication according to the first communication mode. The antenna 110 transmits an instruction signal instructing training of a beam directivity by using microwaves, for example. Also, the antenna 100 receives a notification signal for receiving notification of an optimal transmit beam pattern, from the receiving end, and outputs the notification signal to the first analog section 122, for example.

The first analog section 122 typically corresponds to an RF (Radio Frequency) circuit for transmitting and receiving radio signals according to the first communication mode. That is, the first analog section 122 low-noise amplifies and down-converts an RF receive signal received by the antenna 110, and outputs the resulting signal to the AD conversion section 124 in the subsequent stage. Also, the first analog section 122 up-converts a transmit signal converted into an analog signal by the DA conversion section 126, to the RF band, power-amplifies the resulting signal, and outputs the signal to the antenna 110.

The AD conversion section 124 converts an analog receive signal inputted from the first analog section 122 into a digital signal, and outputs the digital signal to the first digital section 130 in the subsequent stage. Also, the DA conversion section 126 converts a digital transmit signal inputted from the first digital section 130 into an analog signal, and outputs the analog signal to the first analog section 122.

The first digital section 130 is typically made up of a circuit for demodulating and decoding a receive signal in accordance with the first communication mode, and a circuit for encoding and modulating a transmit signal in accordance with the first communication mode. When, for example, an instruction signal instructing training of a beam directivity is inputted from the control section 140, the first digital section 130 modulates and encodes a beam training signal that is used for the training by the communicating party, and outputs the resulting signal to the DA conversion section 126. Also, when, for example, a notification signal (previously described) for notifying an optimal transmit beam pattern is inputted from the AD conversion section 124, the first digital section 130 demodulates and decodes the notification signal and outputs the resulting signal to the control section 140.

Fig. 3 shows an example of the internal configuration of the first digital section 130. As shown in the drawing, the first digital section 130 includes a synchronization section 131, a demodulation/decoding section 132, and an encoding/modulation section 133. The synchronization section 131 synchronizes the start timing of a receiving process in accordance with, for example, detection of the preamble at the beginning of a frame in the first communication mode, for a receive signal at the antenna 110. The demodulation/decoding section 132 demodulates and decodes the receive signal in accordance with arbitrary modulation mode and encoding mode used for the first communication mode, thereby acquiring a data signal, and outputs the data signal to the control section 140. The encoding/modulation section 133 encodes and modulates a data signal inputted from the control section 140 in accordance with arbitrary encoding mode and modulation mode used for the first communication mode, thereby generating a transmit signal, and outputs the transmit signal to the DA conversion section 126.

Returning to Fig. 2, the description will continue on the configuration of the radio communication apparatus 100.

The control section 140 is formed using, for example, an arithmetic unit such as a microprocessor, and controls the overall operation of the first radio communication section 120. For example, the control section 140 outputs to the first digital section 130 an instruction signal (previously described) instructing training of a beam directivity, in response to a request from a predetermined application (such as an upper layer program of the communication protocol). Also, upon input of a decoded notification signal (previously described) from the first digital section 130, the control section 140 acquires feedback information for identifying an optimal transmit beam pattern included in this notification signal, and saves this into the storage section 150.

The storage section 150 is formed by, for example, a writable recording medium such as a semiconductor memory, and is used as a work memory used to load a program for executing communication processing by the radio communication apparatus 100, or to store various parameter values. In this embodiment, the storage section 150 stores feedback information for identifying an optimal transmit beam pattern to be used at the time of radio communication by the second radio communication section 170 according to the second communication mode.

The plurality of antennas 160a to 160n are used for radio communication according to the second communication mode. Specifically, the antennas 160a to 160n each transmit a radio signal weighted using a predetermined weighting coefficient, by using a millimeter wave. Also, the antennas 160a to 160n receive millimeter-wave radio signals, and output the radio signals to the second analog section 172.

The second analog section 172 typically corresponds to an RF circuit for transmitting and receiving radio signals according to the second communication mode. That is, the second analog section 172 low-noise amplifies and down-converts a plurality of receive signals received by the respective antennas 160a to 160n, and outputs the resulting signals to the AD conversion section 174 in the subsequent stage. Also, the second analog section 172 up-converts a plurality of transmit signals each converted into an analog signal by the DA conversion section 176, to the RF band, power-amplifies the resulting signals, and outputs the signals to the respective antennas 160a to 160n.

The AD conversion section 174 converts each of a plurality of analog receive signals inputted from the second analog section 172 into a digital signal, and outputs the digital signal to the second digital section 180 in the subsequent stage. Also, the DA conversion section 176 converts each of a plurality of digital transmit signals inputted from the second digital section 180 into an analog signal, and outputs the analog signal to the second analog section 172.

The second digital section 180 is typically made up of a circuit for demodulating and decoding a receive signal in accordance with the second communication mode, and a circuit for encoding and modulating a transmit signal in accordance with the second communication mode.

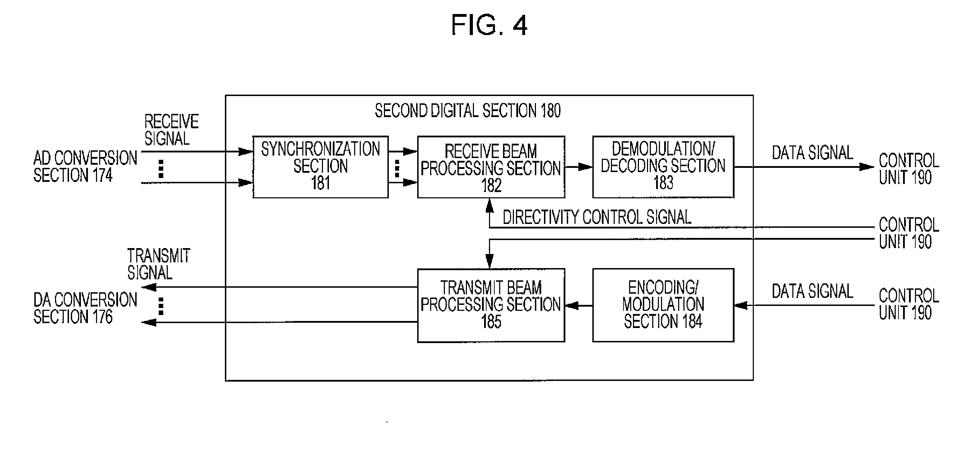

Fig. 4 shows an example of the internal configuration of the second digital section 180. As shown in the drawing, the second digital section 180 includes a synchronization section 181, a receive beam processing section 182, a demodulation/decoding section 183, an encoding/modulation section 184, and a transmit beam processing section 185.

The synchronization section 181 synchronizes the start timing of a receiving process in accordance with, for example, the preamble at the beginning of frames, for a plurality of receive signals received by the plurality of antennas 160a to 160n, and outputs the resulting signals to the receive beam processing section 181.

The receive beam processing section 182 performs a weighting process in accordance with a uniform distribution or Taylor distribution, for example, for the plurality of receive signals inputted from the synchronization section 181, thereby controlling the directivity of the receive beam. The weight value to be used by the receive beam processing section 182 is specified by a directivity control signal inputted from the control section 190. Alternatively, the receive beam processing section 182 may form the receive beam by regarding the plurality of antennas 160a to 160n as an array antenna.

The demodulation/decoding section 183 demodulates and decodes each receive signal weighted by the receive beam processing section 182, in accordance with arbitrary modulation mode and encoding mode used for the second communication mode, thereby acquiring a data signal. Then, the demodulation/decoding section 183 outputs the acquired data signal to the control section 190.

The encoding/modulation section 184 encodes and demodulates a data signal inputted from the control section 190, in accordance with arbitrary encoding mode and modulation mode used for the second communication mode, thereby generating a transmit signal. Then, the encoding/modulation section 184 outputs the generated transmit signal to the transmit beam processing section 185.

The transmit beam processing section 185 generates a plurality of transmit signals weighted in accordance with a uniform distribution or Taylor distribution, for example, from the transmit signal inputted from the encoding/modulation section 184, and controls the directivity of the transmit beam. The plurality of transmit signals weighted by the transmit beam processing section 185 are each outputted to the DA conversion section 176. Here, the weight value to be used by the transmit beam processing section 185 is specified by a directivity control signal inputted from the control section 190. The control section 190 controls the weight value used by the transmit beam processing section 185 on the basis of feedback information stored in the storage section 150. The feedback information is sent from the receiving end as a notification signal for notifying an optimal transmit beam pattern.

Returning to Fig. 2, the description will continue on the configuration of the radio communication apparatus 100.

The control section 190 is formed using, for example, an arithmetic unit such as a microprocessor, and controls the overall operation of the second radio communication section 170.

In this embodiment, in response to a request from a predetermined application (an upper layer program of the communication protocol), the control section 190 causes a beam training signal to be transmitted from the second radio communication section 170, after the elapse of a predetermined time from transmission of an instruction signal (previously described) instructing training of a beam directivity from the first radio communication section 120.

Also, the control section 190 acquires feedback information for identifying an optimal transmit beam pattern from the storage section 150, and outputs a directivity control signal for forming the optimal transmit beam pattern identified on the basis of the feedback information, to the transmit beam processing section 185 within the second digital section 180. Thus, the transmit beam at the time of radio transmission according to the second communication mode by the radio communication apparatus 100 is directed in the direction in which the communicating party is positioned.

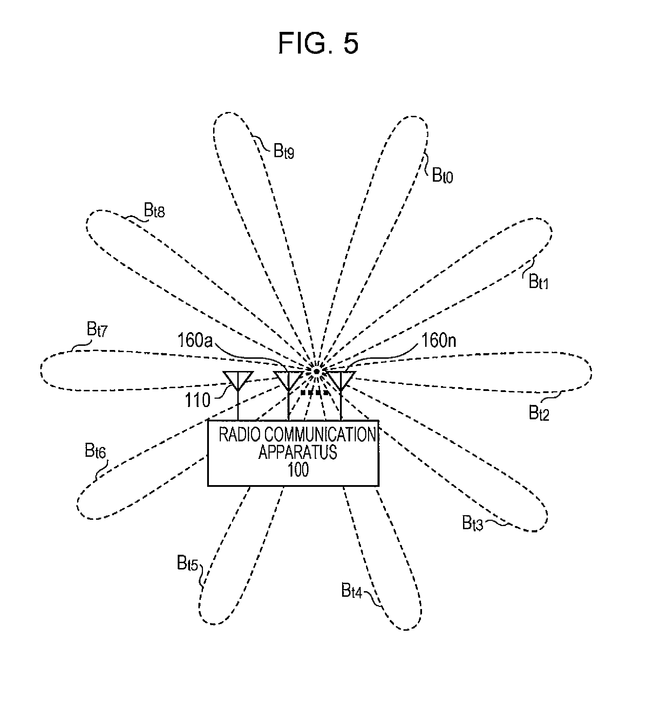

Fig. 5 shows an example of transmit beam patterns that can be formed by the radio communication apparatus 100 through directivity control of the transmit beam by the transmit beam processing section 185. In the example shown in the drawing, the radio communication apparatus 100 can form 10 transmit beam patterns Bₜ₀ to Bₜ₉. The transmit beam patterns Bₜ₀ to Bₜ₉ have directivity in directions that differ by 36 degrees in the plane in which the radio communication apparatus 100 is positioned. In accordance with a directivity control signal from the control section 190, by using one transmit beam pattern from among these 10 transmit beam patterns Bₜ₀ to Bₜ₉, the transmit beam processing section 185 can cause a directional radio signal to be transmitted from each of the antennas 160a to 160n.

Also, the receive beam patterns that can be formed by the radio communication apparatus 100 may be beam patterns similar to the transmit beams Bₜ₀ to Bₜ₉ shown in Fig. 5. That is, in accordance with a directivity control signal from the control section 190, the receive beam processing section 182 can cause a radio signal according to the second communication mode to be received by each of the antennas 160a to 160n, by setting a receive beam pattern that matches one of (or a combination of two or more of) such 10 receive beam patterns Bᵣ₀ to Bᵣ₉.

In the storage section 150 of the radio communication apparatus 100, for example, weighting coefficients for the individual antennas 160a to 160n for forming these transmit and receive beam patterns Bₜ₀ to Bₜ₉ and Bᵣ₀ to Bᵣ₉, respectively, are stored in advance.

It should be noted that the transmit beam patterns and the receive beam patterns that can be formed by the radio communication apparatus 100 are not limited to the example shown in Fig. 5. For example, the plurality of antennas 160a to 160n can be configured so as to be able to form transmit beam patterns or receive beam patterns having directivity in various directions in the three-dimensional space.

The radio communication apparatus 100 uses a combination of the first radio communication section 120 that performs radio communication by using microwaves, and the second radio communication section 170 that performs radio communication by using millimeter waves. Under an environment in which an appropriate transmit beam pattern is unknown for the radio communication apparatus 100, frame synchronization and an instruction signal instructing training of a beam directivity are transmitted from each of the first radio communication section 120 and the antenna 110, and a beam training signal used for the communicating party for beam training is transmitted from each of the second radio communication section 170 and the plurality of antennas 160a to 160n.

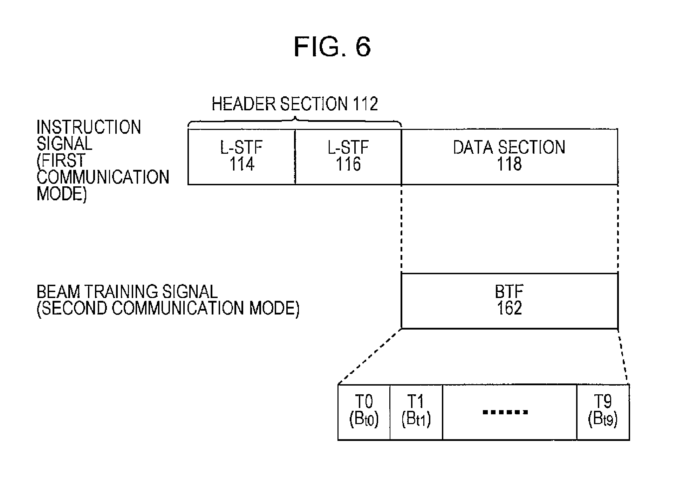

Fig. 6 shows an example of the signal formats of an instruction signal instructing training of a beam directivity to the communication party, and a beam training signal used for the communicating party for the beam training, which are transmitted from the radio communication apparatus 100.

The instruction signal includes a header section 112 and a data section 118, and is transmitted from the antenna 110 in accordance with the first communication mode. The header section 112 is made up of, for example, L-STF (Legacy-Short Training Field) 114, and L-LTF (Legacy-Long Training Field) 116. Of these, the L-STF 114 mainly serves as a preamble, and can be used for frame detection, automatic gain control (AGC), and synchronization processing at the receiving end. Also, the L-LTF 116 is mainly used for channel estimation, and frequency offset compensation. Also, arbitrary data is stored in the data section 118. Although not shown, it is assumed that the data section 118 includes SIGNAL information (L-SIG) describing the source address and destination address of the corresponding frame, data length, information related to the first communication mode (such as the encoding mode and transmission rate applied), and so on.

On the other hand, the beam training signal includes a BTF (Beam Training Field) 162, and is transmitted in accordance with the second communication mode from each of the plurality of antennas 160a to 160n. In accordance with control by the control section 190, the BTF 162 is transmitted from each of the antennas 160a to 160n in synchronism with the timing at which the data section 118 of the instruction signal mentioned above is transmitted from the antenna 110. Also, in cases such as where frame synchronization acquired by the first radio communication section 120 by using the header section 112 of the instruction signal is to be used also in the second radio communication section 170, as shown in the drawing, the header section of the beam training signal can be omitted.

The beam training signal is obtained by multiplexing training signal sequences for the individual transmit beam patterns Bₜ₀ to Bₜ₉. In the example shown in Fig. 6, the training signal sequences are multiplexed by time division. The beam training signal BTF 162 is made up of 10 time slots T0 to T9 respectively corresponding to the transmit beam patterns Bₜ₀ to Bₜ₉ shown in Fig. 5. Further, in the time slots T0 to T9, 10 training signal sequences are sequentially transmitted, which are weighted by weighting coefficients for forming the transmit beam patterns Bₜ₀ to Bₜ₉, respectively, with respect to a predetermined known signal sequence. Therefore, the directivity of the transmit beam for the beam training signal sequentially changes in the manner of the transmit beam patterns Bₜ₀ to Bₜ₉ shown in Fig. 5, for the individual time slots T0 to T9.

At the receiving end that is positioned around the radio communication apparatus 100, the power level of the receive signal is observed for each of the time slots T0 to T9 (i.e., for each training signal sequence) of the beam training signal BTF 162. As a result, the power level of the receive signal becomes an outstanding value in one of the time slots of the beam training signal BTF 162. The time slot in which the power level of the receive signal peaks varies in accordance with the relative position with respect to the radio communication apparatus 100. Then, the transmit beam pattern corresponding to the time slot in which the received power level peaks can be determined as an optimal transmit beam pattern for the radio communication apparatus 100 as the transmitting end as well.

It should be noted that each training signal sequence to be put on the beam training signal BTF 162 may be, for example, a random pattern according to BPSK (Binary Phase Shift Keying), or the like.

Also, the instruction signal shown in Fig. 6 can be transmitted by using a frame such as an RTS (Request to Send) or a CTS (Clear to Send), which are prescribed in the standard specification for the wireless LAN such as IEEE802.11a/b/g. Beam training using the RTS/CTS transmission/reception procedure and the feedback method for the training results will be described later in detail.

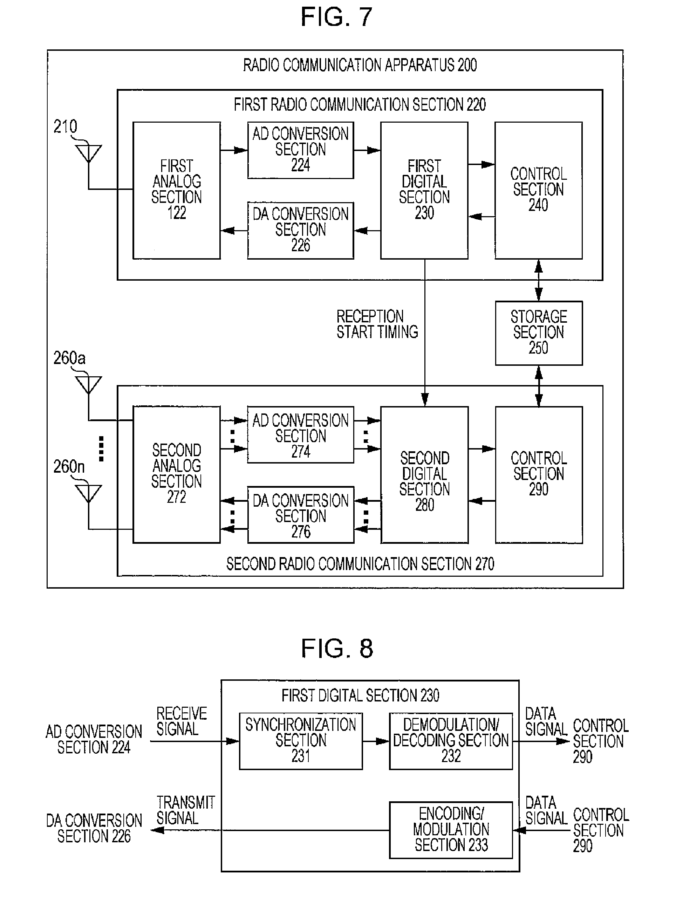

Fig. 7 shows an example of the configuration of the radio communication apparatus 200 that operates as the receiving end in the millimeter-wave communication system shown in Fig. 1. The radio communication apparatus 200 shown in the drawing includes the antenna 210, a first radio communication section 220, a storage section 250, the plurality of antennas 260a to 260n, and a second radio communication section 270. The first radio communication section 220 includes a first analog section 222, an AD conversion section 224, a DA conversion section 226, a first digital section 230, and a control section 240. Also, the second radio communication section 270 includes a second analog section 272, an AD conversion section 274, a DA conversion section 276, a second digital section 280, and a control section 290.

The antenna 210 is an antenna that is used for radio communication according to the first communication mode. The antenna 210 receives an instruction signal (see Fig. 6) transmitted from the radio communication apparatus 100, for example. Also, the antenna 210 transmits a notification signal for notifying feedback information related to an optimal transmit beam pattern, which is determined by processing a beam training signal (see Fig. 6) transmitted in synchronism with the data section of the instruction signal from the radio communication apparatus 100, for example. It should be noted, however, that details of the method of writing the feedback information will be given later.

The first analog section 222 typically corresponds to an RF circuit for transmitting and receiving radio signals according to the first communication mode. That is, the first analog section 222 low-noise amplifies and down-converts a receive signal received by the antenna 210, and outputs the resulting signal to the AD conversion section 224 in the subsequent stage. Also, the first analog section 222 up-converts a transmit signal converted into an analog signal by the DA conversion section 226, and outputs the resulting signal to the antenna 210.

The AD conversion section 224 converts an analog receive signal inputted from the first analog section 222 into a digital signal, and outputs the digital signal to the first digital section 230 in the subsequent stage. The DA conversion section 226 converts a digital transmit signal inputted from the first digital section 230 into an analog signal, and outputs the analog signal to the first analog section 222.

The first digital section 230 typically has a circuit for demodulating and decoding a receive signal in accordance with the first communication mode, and a circuit for encoding and modulating a transmit signal in accordance with the first communication mode. Further, in this embodiment, when an instruction signal is inputted from the AD conversion section 224, and synchronization is acquired by using, for example, the L-LTF 116 (see Fig. 6) in the header section 112 of the instruction signal, the first digital section 230 notifies the second digital section 280 in the second radio communication section 270 of a reception start timing at which to start reception of a beam training signal on the basis of the synchronization timing. The receiving process of a beam training signal by the second digital section 280 will be described later in detail. Also, for example, when a notification signal including feedback information for notifying the transmitting end of an optimal transmit beam pattern determined by using a beam training signal is inputted from the control section 240, the first digital section 230 modulates and encodes the notification signal, and outputs the resulting signal to the DA conversion section 226.

Fig. 8 shows an example of the internal configuration of the first digital section 230. As shown in the drawing, the first digital section 230 includes a synchronization section 231, a demodulation/decoding section 232, and an encoding/modulation section 233. The synchronization section 231 acquires frame synchronization by performing, for example, a correlation process on the L-LTF 116 in the header section 112 of an instruction signal. Since a known technique can be applied to the frame synchronization method, a detailed description thereof is omitted here. Also, the synchronization section 231 outputs the reception start timing for the data section 118 of the instruction signal, as the reception start timing for the beam training signal BTF 162 to the second radio communication section 270. The demodulation/decoding section 232 demodulates and decodes a receive signal in accordance with arbitrary modulation mode and encoding mode used for the first communication mode, thereby acquiring a data signal, and outputs the data signal to the control section 240. The encoding/modulation section 233 encodes and modulates a data signal inputted from the control section 240 in accordance with arbitrary encoding mode and modulation mode used for the first communication mode, thereby generating a transmit signal, and outputs the transmit signal to the DA conversion section 226.

For example, suppose that the time interval from a predetermined position in the header section 112 of the instruction signal (such as the beginning of the L-STF 114, the beginning of the L-LTF 116, or the end of the L-LTF 116) to the beginning of the beam training signal is set in advance between the radio communication apparatus 100 serving as the transmitting end, and the radio communication apparatus 200 serving as the receiving end. In such a case, the first digital section 230 can determine, as the reception start timing, the time instant when this time interval has elapsed from the time instant when the above-mentioned predetermined position in the header section 112 of the instruction signal is detected. Alternatively, for example, in the radio communication apparatus 100 at the transmitting end, data specifying a specific reception start timing may be included in the header section 112 of the instruction signal. In such a case, the first digital section 230 acquires the data specifying a reception start timing from the header section 112 of the instruction signal, and can determine the reception start time instant on the basis of this data.

Returning to Fig. 7, the description will continue on the configuration of the radio communication apparatus 200.

The control section 240 is formed using, for example, an arithmetic unit such as a microprocessor, and controls the overall operation of the first radio communication section 220. Also, when feedback information related to an optimal transmit beam pattern at the transmitting end is determined by the second radio communication section 270 described later, the control section 240 stores the feedback information into the storage section 250. Also, the control section 240 acquires this feedback information from the storage section 250, and outputs the feedback information to the first digital section 230 while including the feedback information in the notification signal described above.

The storage section 250 is formed by, for example, a writable recording medium such as a semiconductor memory, and is used as a work memory for loading a program used for communication processing by the radio communication apparatus 200, or for storing various parameter values. In this embodiment, the storage section 250 stores feedback information (described later) determined by a determining section 284, which is used for identifying an optimal transmit beam pattern determined by the second radio communication section 270.

The plurality of antennas 260a to 260n are antennas used for radio communication according to the second communication mode. Specifically, the antennas 260a to 260n each transmit a radio signal weighted using a predetermined weighting coefficient, by using a millimeter wave. Also, the antennas 260a to 260n receive millimeter-wave radio signals, and output the radio signals to the second analog section 272.

The second analog section 272 typically corresponds to an RF circuit for transmitting and receiving radio signals according to the second communication mode. That is, the second analog section 272 low-noise amplifies and down-converts a plurality of receive signals received by the respective antennas 260a to 260n, and outputs the resulting signals to the AD conversion section 274 in the subsequent stage. Also, the second analog section 272 up-converts a plurality of transmit signals each converted into an analog signal by the DA conversion section 276, to the RF band, power-amplifies the resulting signals, and outputs the signals to the respective antennas 260a to 260n.

The AD conversion section 274 converts each of a plurality of analog receive signals inputted from the second analog section 272 into a digital signal, and outputs the digital signal to the second digital section 280 in the subsequent stage. Also, the DA conversion section 276 converts each of a plurality of digital transmit signals inputted from the second digital section 280 into an analog signal, and outputs the analog signal to the second analog section 272.

The second digital section 280 typically has a circuit for demodulating and decoding a receive signal in accordance with the second communication mode, and a circuit for encoding and modulating a transmit signal in accordance with the second communication mode.

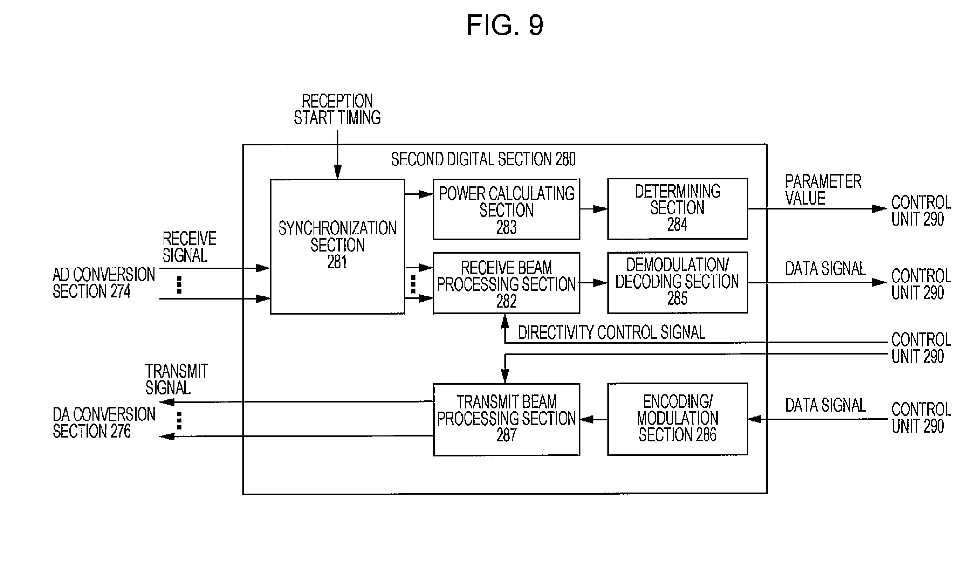

Fig. 9 shows an example of the internal configuration of the digital section 280. As shown in the drawing, the digital section 280 includes a synchronization section 281, a receive beam processing section 282, a power calculating section 283, the determining section 284, a demodulation/decoding section 285, an encoding/modulation section 286, and a transmit beam processing section 287.

The synchronization section 281 synchronizes the start timing of a receiving process in accordance with the preamble at the beginning of frames, for a plurality of receive signals received by the plurality of antennas 260a to 260n, and outputs the resulting signals to the receive beam processing section 282. Also, upon being notified of the reception start timing (previously described) for a beam training signal from the first digital section 230 of the first radio communication section 220, the synchronization section 281 starts reception of the beam training signal BTF 162 (see Fig. 6) from this reception start timing. Then, the synchronization section 281 outputs the received beam training signal to the receive beam processing section 282 in the subsequent stage, and instructs the power calculating section 283 to calculate received power.

Like the receive beam processing section 182 at the transmitting end, the receive beam processing section 282 performs a weighting process in accordance with a uniform distribution or Taylor distribution, for example, for the plurality of receive signals inputted from the synchronization section 281, thereby controlling the directivity of the receive beam. Then, the receive beam processing section 282 outputs the weighted receive signals to the power calculating section 283 and the demodulation/decoding section 285.

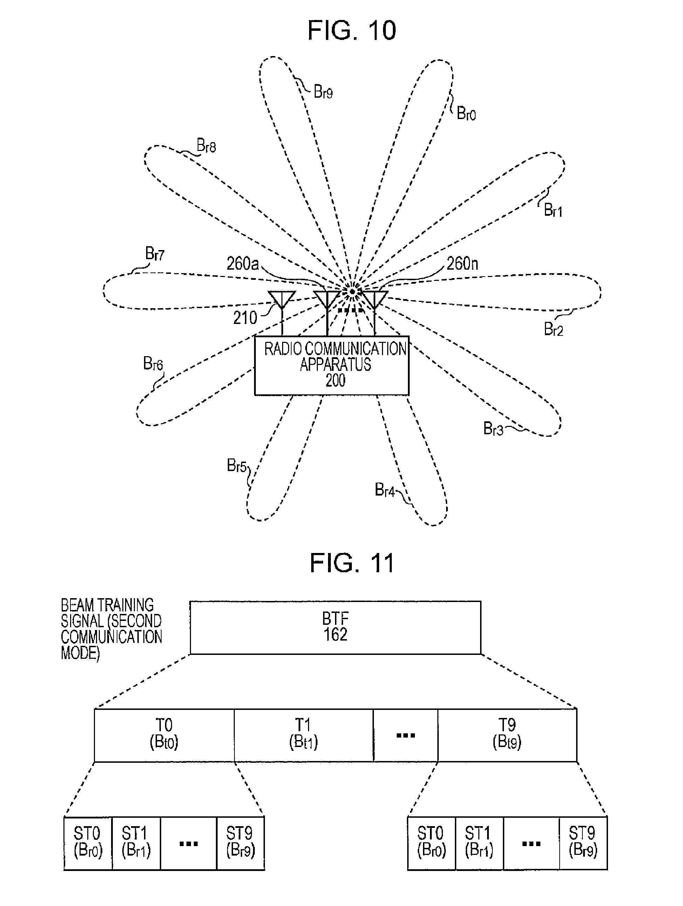

Here, with reference to Fig. 10 and Fig. 11, a description will be given of a process in which the directivity of the receive beam is controlled in the receive beam processing section 282.

Fig. 10 shows an example of receive beam patterns that can be formed by the radio communication apparatus 200 through directivity control of the receive beam by the receive beam processing section 282. In the example shown in the drawing, the radio communication apparatus 200 can form 10 receive beam patterns Bᵣ₀ to Bᵣ₉. The receive beam patterns Bᵣ₀ to Bᵣ₉ have directivity in directions that differ by 36 degrees in the plane in which the radio communication apparatus 200 is positioned. In accordance with a directivity control signal from the control section 290, by using one receive beam pattern from among these 10 transmit beam patterns Bₜ₀ to Bₜ₉, the receive beam processing section 282 can cause an incoming radio signal to be received by each of the antennas 260a to 260n.

In Fig. 11, an example of the signal format of the beam training signal BTF 162 transmitted in accordance with the second communication mode from the radio communication apparatus 100 serving as the transmitting end is shown again. The beam training signal BTF 162 is made up of 10 time slots T0 to T9 respectively corresponding to the transmit beam patterns Bₜ₀ to Bₜ₉. Further, in the time slots T0 to T9, 10 training signal sequences are sequentially transmitted, which are weighted by weighting coefficients for forming the transmit beam patterns Bₜ₀ to Bₜ₉, respectively, with respect to a predetermined known signal sequence. The receive beam processing section 282 further divides each of the time slots T0 to T9 of the beam training signal BTF 162 into 10 small segments ST0 to ST9, and in each of the small segments ST0 to ST9, weights the receive signal by 10 different receive beam patterns Bᵣ₀ to Bᵣ₉. In the example shown in Fig. 11, the first small segment ST0 of the time slot T0 is associated with the receive beam pattern Bᵣ₀, the second small segment ST1 of the time slot T0 is associated with the receive beam pattern Bᵣ₁, ..., the first small segment ST0 of the time slot T9 is associated with the receive beam pattern Bᵣ₀, and so on. Through such a directivity control process for the receive beam, with a single beam training signal BTF 162, receive signals transmitted and received by 10 transmit beam patterns × 10 receive beam patterns = a total of 100 transmit and receive beam patterns can be obtained.

It should be noted that the scope of the present invention is not limited to the case in which the radio communication apparatus 200 performs directivity control of the receive beam by the receive beam processing section 282. For example, the radio communication apparatus 200 may include only one (or omni-directional) antenna for the second communication mode, and may not perform directivity control of the receive beam by the receive beam processing section 282. In this case, the number of transmit and receive beam patterns that can be obtained from a single beam training signal is 10, which is the same as the number of transmit beam patterns from the transmitting end.

Alternatively, the receive beam processing section 282 may perform directivity control in such a way as to form a receive beam pattern appropriate to an optimal transmit beam pattern that is set on the basis of feedback information at the transmitting side, which is determined by the determining section 284 described later.

The power calculating section 283 calculates the received powers of the respective receive signals transmitted and received by the total of 100 transmit and receive beam patterns described above, in accordance with an instruction from the synchronization section 281. Then, the power calculating section 283 sequentially outputs the received power values calculated for the individual transmit and receive beam patterns to the determining section 284.

On the basis of the received power values inputted from the power calculating section 283, the determining section 284 determines feedback information to be notified by a notification signal to the transmitting end, and outputs the feedback information to the control section 290 in the subsequent stage. Here, feedback information refers to information necessary for identifying an optimal transmit beam pattern at the transmitting end. The method of writing the feedback information will be described later. Also, the determining section 284 may also determine an optimal receive beam pattern for the determining section 284 itself that serves as the receiving end.

The demodulation/decoding section 285 demodulates and decodes each receive signal weighted by the receive beam processing section 282, in accordance with arbitrary modulation mode and encoding mode used for the second communication mode, thereby acquiring a data signal. Then, the demodulation/decoding section 285 outputs the acquired data signal to the control section 290.

The encoding/modulation section 286 encodes and demodulates a data signal inputted from the control section 290, in accordance with arbitrary encoding mode and modulation mode used for the second communication mode, thereby generating a transmit signal. Then, the encoding/modulation section 286 outputs the generated transmit signal to the transmit beam processing section 287.

Like the transmit beam processing section 187 at the transmitting end, the transmit beam processing section 287 generates a plurality of transmit signals weighted in accordance with a uniform distribution or Taylor distribution, for example, from the transmit signal inputted from the encoding/modulation section 286, and controls the directivity of the transmit beam. The weight value to be used by the transmit beam processing section 287 is specified by a directivity control signal inputted from the control section 290, for example. The plurality of transmit signals weighted by the transmit beam processing section 287 are each outputted to the DA conversion section 276.

Returning to Fig. 7, the description will continue on the configuration of the radio communication apparatus 200.

In this embodiment, the control section 290 is formed using, for example, an arithmetic unit such as a microprocessor, and controls the overall operation of the second radio communication section 270.

Also, when the beam training signal BTF is received by the second radio communication section 270, the control section 290 causes the storage section 250 to store feedback information for identifying an optimal transmit beam pattern which is outputted from the second digital section 280. The feedback information stored in the storage section 250 is notified using a notification signal to the radio communication apparatus 100 that is the transmitting end of the beam training signal BTF, by the first radio communication section 220. The method of writing the feedback information will be described later.

Also, the control section 290 may output, to the receive beam processing section 282, a directivity control signal including a parameter value for identifying an optimal receive beam pattern, so that a receive beam pattern having directivity toward the direction of the communicating party is set.

Further, the control section 290 may output, to the transmit beam processing section 287, a directivity control signal including the same parameter value as the value used for forming the receive beam, so that a transmit beam having directivity toward the same direction is formed. This makes it possible to perform radio communication with the radio communication apparatus 100 that is the transmitting end, in accordance with the second communication mode while mutually directing the directivity toward the communicating party.

It should be noted that instead of notifying a parameter value for identifying an optimal receive beam pattern from the second radio communication section 270 to the first radio communication section 220 via the storage section 250, the parameter value may be notified from the second radio communication section 270 to the first radio communication section 220 by using, for example, a dedicated signal line.

Subsequently, a communication operation in the radio communication system shown in Fig. 1 will be described.

It is known that radio communication is subject to a hidden terminal problem, in which a region where communication stations cannot directly communicate with each other exists. Since hidden terminals cannot negotiate with each other, there is a possibility that their transmit operations collide with each other. As a methodology for solving the hidden terminal problem, CSMA/CA (Carrier Sense Multiple Access with Collision Avoidance) based on the RTS/CTS handshake procedure is commonly known, and is widely used in wireless LAN systems such as IEEE802.11. In the radio communication system according to this embodiment as well, the RTS/CTS mode can be applied.

In the RTS/CTS mode, a communication station that is the data source transmits a transmission start request frame RTS, and starts transmission of data frames in response to reception of a confirmation frame CTS from a communication station that is the data destination. At this time, a hidden terminal for the data transmitting end (RTS transmitting station) receives a CTS and sets a transmission suspend period (NAV: Network Allocation Vector), thereby avoiding a collision with the data frames. Also, a hidden terminal for the data receiving end (CTS transmitting station) receives an RTS and sets a transmission suspend period, thereby avoiding a collision with an ACK that is replied upon reception of the data frames.

Also, the second communication mode using millimeter waves suffers from the flight distance problem resulting from severe attenuation upon reflection, and large propagation loss. Accordingly, in the radio communication system according to this embodiment, while control frames such as RTC, CTS, and ACK are sent by the first communication mode that gives a long communication distance, a beam training signal and data frames are transmitted by the second communication mode, thereby also solving the flight distance problem in addition to the hidden terminal problem mentioned above.

The communication station at the data transmitting end includes an instruction signal instructing training of a beam directivity in an RTS frame in the first communication mode, and in parallel with this RTS frame, transmits a beam training signal used for beam training by the second communication mode.

On the other hand, in response to reception of the instruction signal in the first communication mode, the communication station at the data receiving end performs beam training by using the beacon training signal received in the second communication mode, thereby controlling the directivity of its own receive beam (or the receive beam may remain omni-directional), and also determines feedback information for identifying an optimal transmit beam pattern at the transmitting end. Then, the communication station at the data receiving end includes, in a CTS frame, a notification signal in which the feedback information is written, and transmits the CTS frame to the communication station at the data transmitting end.

Upon receiving the CTS, on the basis of the feedback information notified by the notification signal, the communication station at the data transmitting end identifies the optimal transmit beam pattern to be used when transmitting a signal to the communication station at the data receiving end in accordance with the second communication mode, and then transmits data frames while controlling the directivity of the transmit beam on the basis of this.

Since data frames are transmitted by an optimal transmit/receive beam pattern in this way, the flight distance problem for the second communication mode can be solved. Also, while control frames such as RTS are exchanged by the first communication mode, data is transmitted by the second communication mode using millimeter waves, thereby realizing high speed data communication.

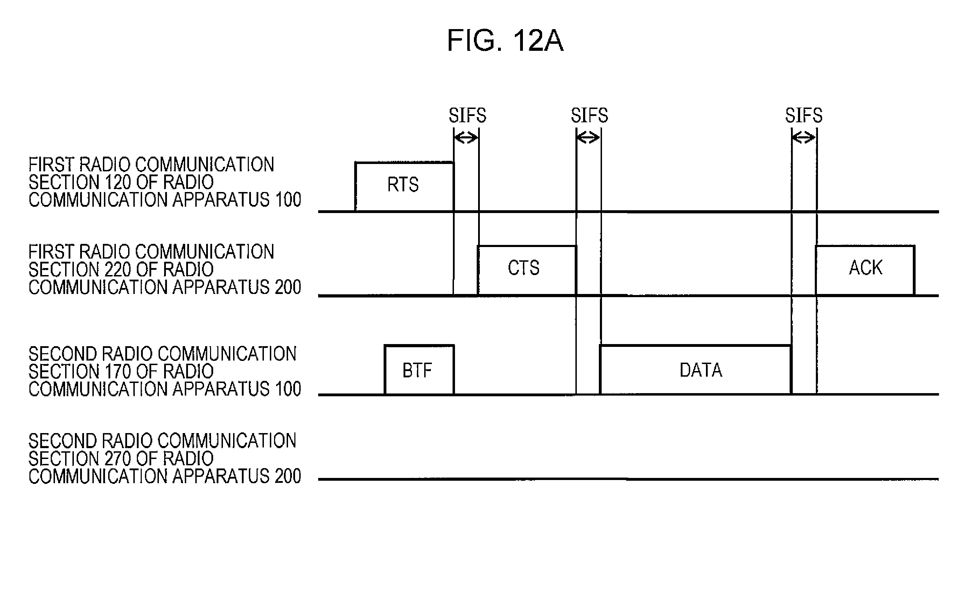

Fig. 12A shows an example of a signal transmission/reception sequence performed by utilizing the RTS/CTS mode in the radio communication system shown in Fig. 1. In the example shown in the drawing, it is supposed that the radio communication apparatus 100 serves as the data source (i.e., the RTS transmitting end), and the radio communication apparatus 200 serves as the data receiving end (i.e., the CTS transmitting end).

First, after confirming that the medium is clear for a predetermined period by the CSMA procedure, for example, the radio communication apparatus 100 transmits an RTS according to the first communication mode from the first radio communication section 120 toward the radio communication apparatus 200. Also, in parallel with the transmission of the RTS, the radio communication apparatus 100 transmits a BTF according to the second communication mode from the second radio communication section 170.

Here, the RTS includes an instruction signal that instructs training of a beam directivity to the communication party. Also, the BTF corresponds to a beam training signal used for training of a beam directivity by the communicating party. As shown in Fig. 6, the BTF is transmitted in synchronism with the timing when the data section of the RTS is transmitted, with its header section omitted.

In contrast, the radio communication apparatus 200 can receive the BTF by the second radio communication section 270, and determine the optimal transmit pattern to be used when the radio communication apparatus 100 transmits a signal to the radio communication apparatus 200 in accordance with the second communication mode, and the optimal receive beam pattern to be used when receiving a signal according to the second communication mode from the radio communication apparatus 100. It should be noted, however, that the radio communication apparatus 200 may determine only the former, that is, the optimal transmit beam pattern.

Also, in response to the reception of the RTS by the first radio communication section 220, after the elapse of a predetermined inter-frame space SIFS (Short Inter Frame Space), the radio communication apparatus 200 replies a CTS feeding back an indication that the RTS has been successfully received, from the first radio communication section 120 in accordance with the first communication mode. Here, the CTS includes a notification signal for notifying the communicating party of an optimal transmit beam pattern.

The radio communication apparatus 100 can confirm that the medium is clear, through successful reception of the CTS by the first radio communication section 120. Also, on the basis of the notification signal included in the CTS, the radio communication apparatus 100 can detect the optimal transmit beam pattern to be used when transmitting a frame toward the radio communication apparatus 200 in accordance with the second communication mode from the second radio communication section 170.

Then, after the elapse of SIFS from the completion of reception of the CTS, the radio communication apparatus 100 controls the directivity of the second radio communication section 170 so that the optimal transmit beam pattern mentioned above is obtained, and transmits data frames in accordance with the second communication mode.

After transmitting the CTS, the radio communication apparatus 200 waits for the data frames by the second radio communication section 270. At this time, the radio communication apparatus 200 may control the directivity of the second radio communication section 270 so that an optimal receive beam pattern is obtained. Therefore, since an optimal transmit beam pattern (or a combination of optimal transmit and receive beam patterns) determined by training is used for transmission of data frames according to the second communication mode, even when millimeter waves that have high rectilinearity and give a short radio wave reaching distance are used, high speed data transmission according to the second communication mode can be implemented with greater reliability.

Then, upon successfully finishing reception of the data frames by the second radio communication section 270, the radio communication apparatus 200 replies an ACK from the first radio communication section 220 in accordance with the first communication mode, after the elapse of SIFS.

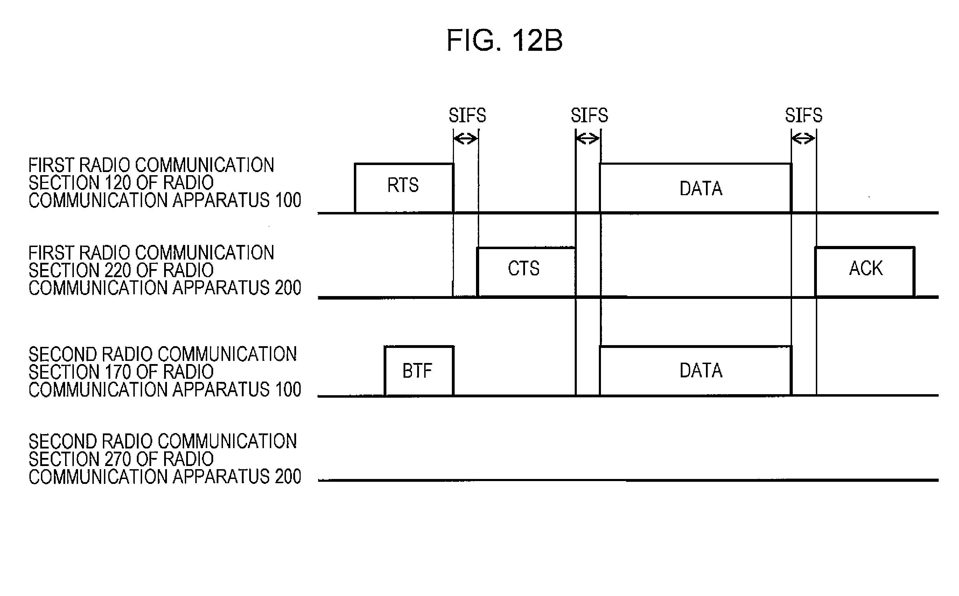

It should be noted that as shown in Fig. 12B, in synchronism with data frames according to the second communication mode, transmission of data frames according to the first communication mode may be performed in parallel.

As described above, the radio communication apparatus 200 can perform training of an optimal beam pattern by using a beam training signal BTF transmitted in accordance with the second communication mode in parallel with an RTS according to the second communication mode, and replies a CTS including a notification signal for notifying the communicating party of an optimal transmit beam pattern.

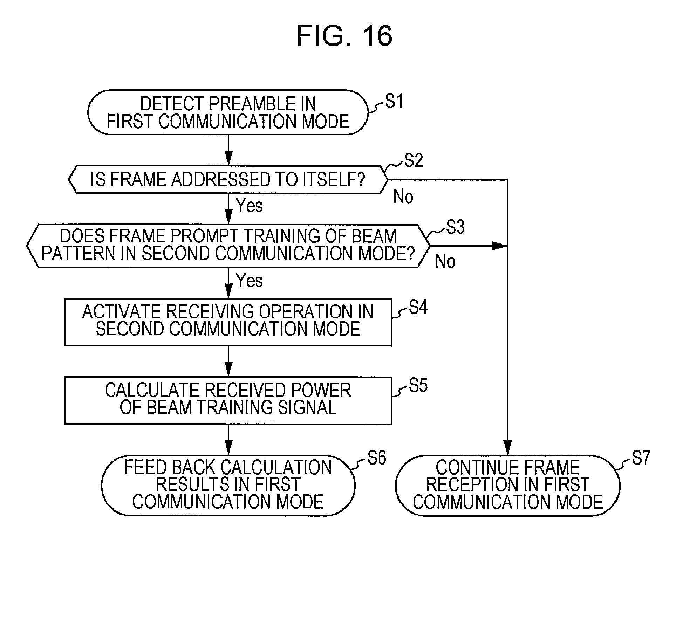

Fig. 16 shows, in the form of a flowchart, a procedure for the radio communication apparatus 200 to feed back information related to an optimal transmit beam pattern to the radio communication apparatus 100. It is supposed that the radio communication apparatuses operate in accordance with, for example, the signal transmission/reception sequence shown in Fig. 12A or Fig. 12B.

This procedure is activated when the radio communication apparatus 200 detects the preamble of a frame according to the first communication mode by the first radio communication section 220 (step S 1). Upon detection of the preamble, frame synchronization can be acquired by performing, for example, a correlation process on the L-LTF 116 of the header section.

Next, in the control section 240, a data signal (L-SIG) that has been demodulated and decoded is analyzed to check whether or not the receive frame is addressed to itself (step S2).

Here, if the receive frame (e.g., RTS) is not addressed to itself (No in step S2), the frame receiving process according to the first communication mode is continued as it is (step S7). Specifically, a transmission suspend period is set on the basis of data length information written in L-SIG within the data section 118, thus avoiding signal collision.

On the other hand, if the receive frame is addressed to itself (Yes in step S2), it is further checked whether or not the receive frame includes an instruction signal, and prompts training of an optimal transmit beam pattern (step S3).

Here, if the receive frame does not include an instruction signal (No in step S3), the frame receiving process according to the first communication mode is continued as it is (step S7). Specifically, the data section 118 of the frame is demodulated and decoded by the first radio communication section 220, and the receive data is passed to the upper layer of the communication protocol.

Also, if the receive frame includes an instruction signal (Yes in step S3), the second radio communication section 270 is activated, and a receiving operation of a transmission signal according to the second communication mode is performed (step S4).

Next, reception of the beam training signal BTF is started on the basis of frame synchronization acquired by means of the header section of the receive frame according to the first communication mode, and in the second digital section 280, the power of the receive signal is calculated, and its transition is observed (step S5).

The determining section 84 determines feedback information for identifying an optimal transmit beam pattern at the transmitting end, on the basis of the calculation results of the received power. Then, a frame (e.g., CTS) including a notification signal in which this feedback information is written is transmitted in accordance with the first communication mode from the first radio communication section 220 (step S6).

Thereafter, upon identifying the optimal transmit beam pattern on the basis of the feedback information, the transmitting end controls the directivity of the transmit beam of the second radio communication section 170 on the basis of this, and transmits a data frame in accordance with the second communication mode. The second radio communication section 270 at the receiving end receives this. Also, in the case of following the signal transmission/reception procedure shown in Fig. 12B, a data frame is also transmitted in accordance with the first communication mode from the transmitting end, and the first radio communication section 220 at the receiving end receives this.

In this embodiment, the determining section 284 within the second radio communication section 270 of the radio communication apparatus 200 determines feedback information for identifying an optimal transmit beam pattern, and in a CTS, this feedback information is written as a notification signal. In the following, the method of writing feedback information for identifying an optimal transmit beam pattern will be described.

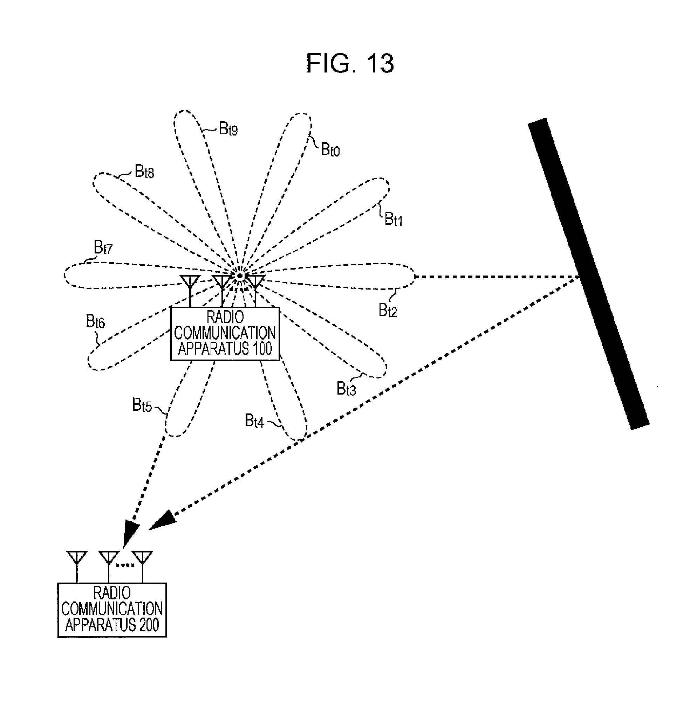

Fig. 13 schematically shows an example of the radio wave propagation condition when the radio communication apparatus 100 is transmitting on each transmit beam pattern from the second radio communication section 170 in accordance with the second communication mode.

In the example shown in the drawing, the radio communication apparatus 100 has directivity in each of directions that differ by 36 degrees in the plane in which the radio communication apparatus 100 itself is positioned, and can form a total of 10 transmit beam patterns Bₜ₀ to Bₜ₉. As shown in Fig. 6, the beam training signal BTF transmitted by the radio communication apparatus 100 is made up of the 10 time slots T0 to T9 respectively corresponding to the transmit beam patterns Bₜ₀ to Bₜ₉. Further, in the time slots T0 to T9, a known signal sequence used for beam training at the receiving end is transmitted while being weighted using weighting coefficients for forming the corresponding transmit beam patterns Bₜ₀ to Bₜ₉, respectively.

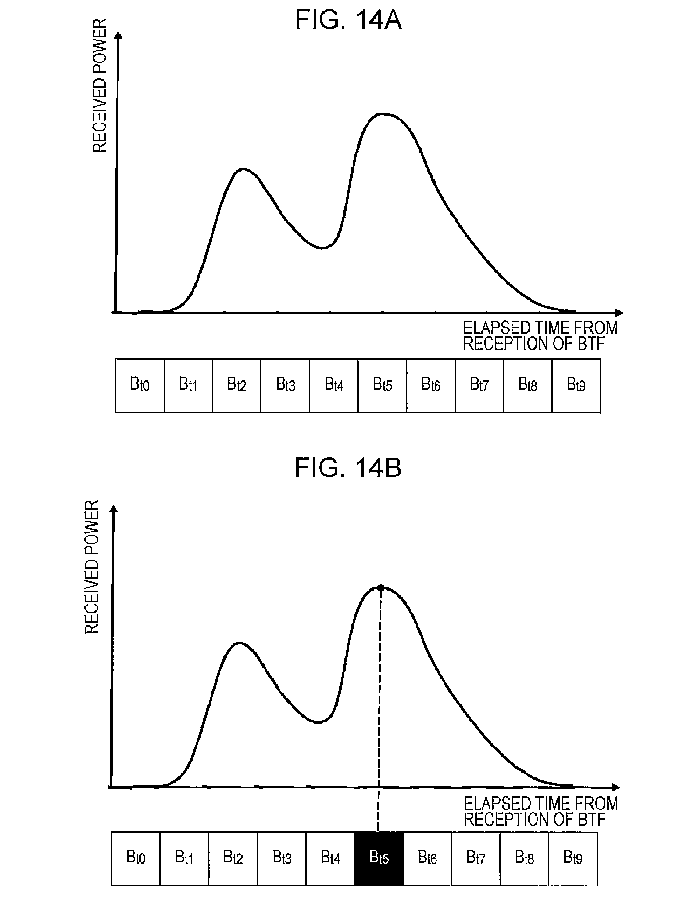

Fig. 14A shows transition of received power at the radio communication apparatus 200 under the radio wave propagation condition shown in Fig. 13. Assuming that the transmission powers of the transmit beam patterns Bₜ₀ to Bₜ₉ in the respective time slots are uniform, the received power becomes maximum when receiving the transmit beam pattern Bₜ₅ that directly arrives without going through an obstacle. It can be appreciated that the received power becomes the next greatest when receiving the transmit beam pattern Bₜ₂ that arrives after being reflected once.

An optimal transmit beam pattern is typically such a transmit beam pattern that maximizes the received power value observed at the receiving end. Therefore, with respect to a single beam training signal BTF obtained by multiplexing training signal sequences for individual transmit beam patterns, the transmit beam pattern corresponding to the training signal sequence that maximizes the series of received power values outputted from the power calculating section 283 can be identified as the optimal one.

Here, in the case where the method of multiplexing training signal sequences when transmitting the beam training signal BTF (i.e., the order of the transmit beam patterns corresponding to the respective time slots), and the names representing the respective transmit beam patterns (e.g., Bₜ₀ to Bₜ₉) have already been shared through pre-setting, pre-negotiation, or the like between the radio communication apparatus 100 that transmits the beam training signal BTF, and the radio communication apparatus 200 that replies a notification signal representing the training results, the radio communication apparatus 200 can estimate the received power for each time slot on the basis of transition of received power of the beam training signal BTF. Upon working out the transmit beam pattern corresponding to the time slot that realizes the maximum received power, the radio communication apparatus 200 may write, in a notification signal, the corresponding beam pattern name or time slot number as feedback information for identifying an optimal transmit beam pattern, for feedback to the radio communication apparatus 100. In the example shown in Fig. 14B, Bₜ₅ is worked out as the beam pattern that realizes the maximum received power, and information for identifying Bₜ₅ is written in the notification signal.

On the other hand, in the case where information for discriminating between beam patterns is not shared between the radio communication apparatus 100 and the radio communication apparatus 200, the radio communication apparatus 200 may write, in a notification signal, transition of received power over the entire segment of the BTF outputted from the power calculating section 283 with respect to the beam training signal BTF received, for feedback to the radio communication apparatus 100. In such a case, the radio communication apparatus 100 can work out an optimal beam pattern by checking the information of the transition of received power written in the received notification signal, against the transition of the beam training signal BTF transmitted by the radio communication apparatus 100 itself.

In the case of feeding back the transition of received power over the entire segment of the BTF, at the radio communication apparatus 100 side that has received the notification, it is possible to work out not only the transmit beam pattern Bₜ₅ that realizes the maximum received power but also the beam pattern Bₜ₂ that provides an effective reflected wave. Therefore, when transmitting data frames in the second communication mode, the radio communication apparatus 100 is able to take flexible actions such as forming a beam pattern that combines the beam pattern Bₜ₅ and the beam pattern Bₜ₂, or setting not only a single beam pattern that maximizes the received power but also a plurality of beam patterns that provide large received powers as candidates.

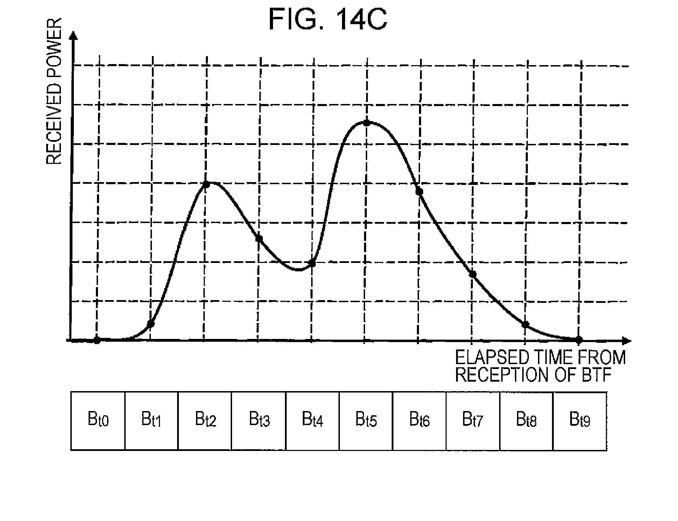

If the transition of received power over the entire segment of the BTF is fed back, however, it is feared that the volume of information will become large. Accordingly, as shown in Fig. 14C, the volume of information may be compressed by extracting the received power level in a somewhat quantized fashion at predetermined sampling intervals.

Also, in the case of feeding back not the information for identifying an optimal transmit beam but received power information to the radio communication apparatus 100, the radio communication apparatus 200 may work out the transmit beam pattern (or the combination of a plurality of transmit beam patterns) that is presumed to be used at the radio communication apparatus 100 side by itself, and when the second radio communication section 270 receives in accordance with the second communication mode, the radio communication apparatus 200 may form a receive beam appropriate to the transmit beam pattern thus worked out.

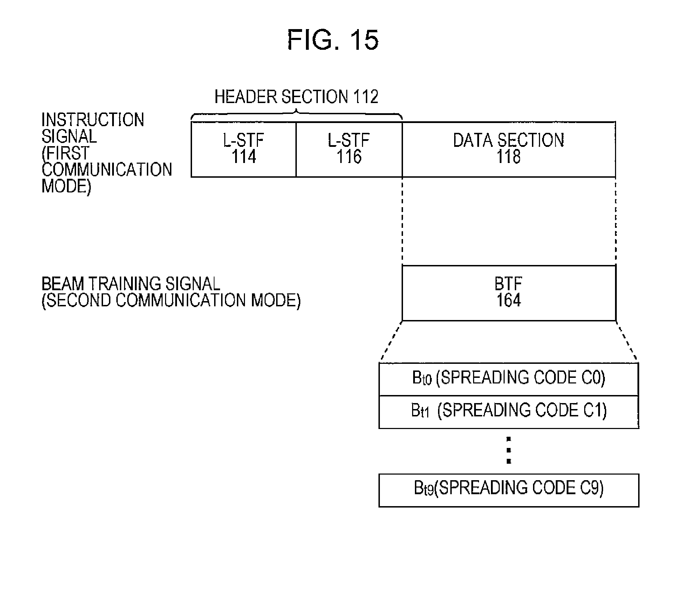

A beam training signal is obtained by multiplexing training signal sequences for the individual transmit beam patterns Bₜ₀ to Bₜ₉. In the format of the beam training signal BTF 162 shown in Fig. 6, the training signal sequences for the individual transmit beam patterns Bₜ₀ to Bₜ₉ are multiplexed by time division. It should be noted, however, that the method of multiplexing the training signal sequences for individual transmit beam patterns is not limited to time division. Fig. 15 shows another format example of the beam training signal BTF. A beam training signal BTF 164 shown in the drawing uses not time division but code division.

In Fig. 15, the beam training signal BTF 164 is a signal in which a plurality of mutually orthogonal or pseudo-orthogonal training signal sequences having different directivity patterns are synthesized by means of code spreading. The transmitting end, that is, the radio communication apparatus 100 can construct the beam training signal 164 shown in the drawing by spreading and synthesizing 10 training signal sequences, which are weighted by weighting coefficients for forming the respective transmit beam patterns Bₜ₀ to Bₜ₉ with respect to a known signal sequence for training, by using a plurality of mutually orthogonal or pseudo-orthogonal spreading codes C0 to C9, respectively.

On the other hand, at the receiving end, that is, the radio communication apparatus 200, the respective training signal sequences corresponding to the transmit beam patterns Bₜ₀ to Bₜ₉ can be extracted by de-spreading the composite signal by using the respective spreading codes C0 to C9. Then, the received power is calculated for each of the extracted training signal sequences by the power calculating section 283, thereby making it possible to determine the optimal transmit beam pattern that maximizes the received power. In this case, as a parameter for identifying a transmit beam pattern (i.e., feedback information notified by a notification signal), the determining section 284 can use the spreading code used for de-spreading of the training signal sequence that maximizes the received power, or the identifier of the spreading code.

Like the beam training signal BTF 162 shown in Fig. 6, the beam training signal BTF 164 shown in Fig. 15 is transmitted in accordance with the second communication mode, in synchronism with transmission of the data section 118 of an instruction signal. It should be noted, however, that the signal format shown in Fig. 15 has an advantage in that the data length of the beam training signal BTF 164 can be made short in comparison to the case in which a number of time slots equal to the number of transmit beam patterns are provided.

Also, even in the case of using the format of the beam training signal BTF shown in Fig. 15, the radio communication apparatus 200 may feed back information of received power for all of the transmit beam patterns, rather than feeding back information for identifying the optimal transmit beam pattern that realizes the maximum received power.

Also, in the case of feeding back received power information for each transmit beam pattern rather than an optimal transmit beam pattern, the radio communication apparatus 200 may work out the transmit beam pattern (or the combination of a plurality of transmit beam patterns) that is presumed to be used at the radio communication apparatus 100 side by itself, and when the second radio communication section 270 receives in accordance with the second communication mode, the radio communication apparatus 200 may form a receive beam appropriate to the transmit beam pattern thus worked out (same as above).

It should be noted that the radio communication apparatuses 100 and 200 may each be, for example, a personal computer (PC), a portable telephone, a portable information terminal such as a PDA (Personal Digital Assistant), a portable music player, or information equipment such as a game machine, or a radio communication module incorporated in a television receiver or other home information equipment.

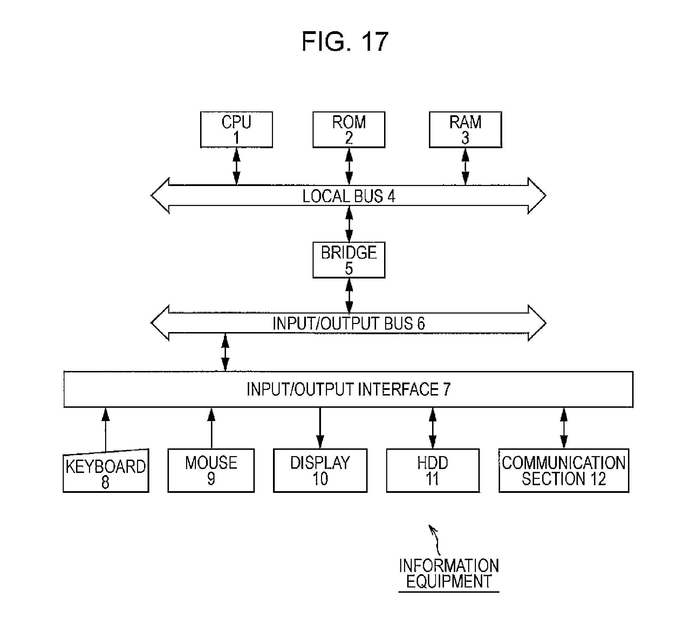

Fig. 17 shows an example of the configuration of information equipment incorporating the radio communication apparatus 100 or 200 that is modularized.

A CPU (Central Processing Unit) 1 executes a program stored in a ROM (Read Only Memory) 2 or a hard disk drive (HDD) 11, under a program execution environment provided by the operating system (OS). For example, a receive frame synchronization process described later or part of the process can be implemented also in the form of the CPU 1 executing a predetermined program.

The ROM 2 permanently stores program codes such as POST (Power On Self Test) and BIOS (Basic Input Output System). A RAM (Random Access Memory) 3 is used for loading a program stored in the ROM 2 or the HDD (Hard Disk Drive) 11 when the CPU 1 executes the program, or for temporarily retaining the working data of the program being executed. These are connected to each other via a local bus 4 that is direct-coupled to the local pin of the CPU 1.

The local bus 4 is connected to an input/output bus 6 such as a PCI (Peripheral Component Interconnect) bus via a bridge 5.

A keyboard 8, and a pointing device 9 such as a mouse are input devices operated by the user. A display 10 is formed by an LCD (Liquid Crystal Display) or a CRT (Cathode Ray Tube), and displays various information in the form of text or images.

The HDD 11 is a drive unit with a built-in hard disk serving as a recording medium, and drives the hard disk. The hard disk is used to install programs executed by the CPU 1 such as the operating system and various applications, and to save various data files or the like.

A communication section 12 is a radio communication interface formed by modularizing one or both of the radio communication apparatuses 100 and 200. The communication section 12 operates as an access point or a terminal station under infrastructure mode, or operates under ad-hoc mode, and executes communication with other communication terminals that exist within the communication range. The operations of the radio communication apparatuses 100 and 200 are as already described above.

In the radio communication system according to the embodiment of the present invention described above, on the basis of an instruction signal transmitted in accordance with the first communication mode (using microwaves), the reception start timing for a beam training signal transmitted in accordance with the second communication mode (using millimeter waves) is determined. Since the beam training signal is transmitted from the transmitting end at the time that coincides with transmission of the data section of the instruction signal, the reception start timing for the beam training signal is a time instant that precedes completion of reception of the instruction signal. Then, at the receiving end, on the basis of the beam training signal BTF received from this reception start timing, feedback information for identifying an optimal transmit beam pattern is determined. That is, it is possible for the receiving end to perform training of an optimal transmit beam directivity used for radio communication according to the second communication mode, during the time for receiving a single frame (e.g., RTS). Also, information related to the optimal transmit beam can be efficiently fed back by transmitting a notification signal from the receiving end to the communicating end.

### Industrial Applicability

In the foregoing, the present invention has been described in detail with reference to specific embodiments. However, it is obvious that a person skilled in the art can make various modifications to and substitutions for the embodiments without departing from the scope of the present invention.

In this specification, the description is mainly focused on an embodiment in which the 5-GHz band used in IEEE802.11a widely adopted as a wireless LAN standard is used for the first communication mode, and the 60-GHz band used in IEEE802.15.3c is used for the second communication mode. However, the scope of the present invention is not necessarily limited to specific frequency bands. Also, the second communication mode may be not only millimeter-wave communication but also other kinds of directional communication.

Also, in this specification, the description is mainly focused on an embodiment in which beam training at the receiving end and feedback of the training results to the transmitting end are performed by using the RTS/CTS transmission/reception procedure. However, the scope of the present invention is not limited to this. Various other transmission/reception procedures can be applied.

Also, while the above-described embodiments are directed to the case in which the radio communication apparatus 100 serves as the transmitting end, and the radio communication apparatus 200 serves as the receiving end, it is also possible to form a radio communication apparatus including both the functions of the radio communication apparatus 100 and radio communication apparatus 200.

In short, the present invention has been disclosed by way of examples, and the descriptions of this specification should not be construed restrictively. The scope of the present invention should be determined by reference to the claims.

### Reference Signs List

- 1: CPU
- 2: ROM
- 3: RAM
- 4: local bus
- 5: bridge
- 6: input/output bus
- 7: input/output interface
- 8: keyboard
- 9: pointing device (mouse)
- 10: display
- 11: HDD
- 12: communication section
- 100: radio communication apparatus (transmitting end)
- 110: antenna (first communication mode)
- 120: first radio communication section
- 122: first analog section
- 124: AD conversion section
- 126: DA conversion section
- 130: first digital section
- 131: synchronization section
- 132: demodulation/decoding section
- 133: encoding/modulation section
- 140: control section
- 150: storage section
- 160a to 160n: plural antennas (second communication mode)
- 170: second radio communication section
- 172: second analog section
- 174: AD conversion section
- 176: DA conversion section
- 180: second digital section
- 181: synchronization section
- 182: receive beam processing section
- 183: demodulation/decoding section
- 184: encoding/modulation section
- 185: transmit beam processing section
- 190: control section
- 200: radio communication apparatus (receiving end)
- 210: antenna (first communication mode)
- 220: first radio communication section
- 222: first analog section
- 224: AD conversion section
- 226: DA conversion section
- 230: first digital section
- 231: synchronization section
- 232: demodulation/decoding section
- 233: encoding/modulation section
- 240: control section
- 250: storage section
- 260a to 260n: plural antennas (second communication mode)
- 270: second radio communication section
- 272: second analog section
- 274: AD conversion section
- 276: DA conversion section
- 280: second digital section
- 281: synchronization section
- 282: receive beam processing section
- 283: demodulation/decoding section
- 284: encoding/modulation section
- 285: transmit beam processing section
- 290: control section

## Claims

1. A communication apparatus comprising:
a first radio communication section that performs radio communication in accordance with a first communication mode;
a second radio communication section that performs radio communication in accordance with a second communication mode using a frequency band higher than the first communication mode;
a power calculating section that calculates a received power when receiving a beam training signal transmitted from a transmitting end including a plurality of transmit beam patterns in the second communication mode, the beam training signal separably including a plurality of training signal sequences for each of the transmit beam patterns; and
a determining section that determines feedback information for identifying an optimal transmit beam pattern at the transmitting end, on a basis of transition of the received power of the beam training signal,
wherein the communication apparatus transmits a notification signal including the feedback information from the first radio communication section to the transmitting end in accordance with the first communication mode.

2. The communication apparatus according to Claim 1, wherein the communication apparatus starts reception of the beam training signal by the second radio communication section at a reception start timing that is determined on a basis of reception of an instruction signal, which instructs training of a beam directivity, by the first radio communication section from the transmitting end.

3. The communication apparatus according to Claim 1, wherein:
a method of separably including the training signal sequences for each of the transmit beam patterns when transmitting the beam training signal is known;
the determining section calculates a received power for each of the plurality of training signal sequences, estimates an optimal transmit beam pattern corresponding to a training signal sequence that makes the received power maximum or large, and determines feedback information for identifying the optimal transmit beam pattern; and
the communication apparatus transmits a notification signal including the feedback information from the first radio communication section to the transmitting end in accordance with the first communication mode.

4. The communication apparatus according to Claim 1, wherein:
the determining section determines feedback information related to transition of the received power calculated by the power calculating section over a period during which the beam training signal is being received; and
the communication apparatus transmits a notification signal including the feedback information from the first radio communication section to the transmitting end in accordance with the first communication mode.

5. The communication apparatus according to Claim 4, wherein the communication apparatus compresses an information volume of the feedback information by acquiring the received power in a quantized manner in a segment in which the beam training signal is received.

6. The communication apparatus according to Claim 1, wherein:
the beam training signal is a signal synthesized by spreading the plurality of training signal sequences for each of the transmit beam patterns by using a plurality of spreading codes that form a mutually orthogonal or pseudo-orthogonal relationship;
the communication apparatus extracts each of the plurality of training signal sequences by de-spreading the beam training signal received by the second radio communication section by using each of the plurality of spreading codes, and the determining section determines, as feedback information, information for identifying a spreading code corresponding to a training signal sequence that makes the received power calculated by the power calculating section maximum or large; and
the communication apparatus transmits a notification signal including the feedback information from the first radio communication section to the transmitting end in accordance with the first communication mode.

7. The communication apparatus according to Claim 1, wherein the second radio communication section includes a plurality of receive beam patterns, estimates an optimal transmit beam pattern that is set at the transmitting end on a basis of the feedback information, sets a receive beam pattern that is optimal for the estimated transmit beam pattern, and receives a signal according to the second communication mode from the transmitting end.

8. A communication method for a communication apparatus including a first radio communication section that performs radio communication in accordance with a first communication mode, and a second radio communication section that performs radio communication in accordance with a second communication mode using a frequency band higher than the first communication mode, comprising:
a power calculating step of calculating a received power when receiving a beam training signal transmitted from a transmitting end including a plurality of transmit beam patterns, the beam training signal separably including a plurality of training signal sequences for each of the transmit beam patterns;
a determining step of determining feedback information for identifying an optimal transmit beam pattern at the transmitting end, on a basis of transition of the received power of the beam training signal; and
a step of transmitting a notification signal including the feedback information from the first radio communication section to the transmitting end in accordance with the first communication mode.

9. A computer program which is described in a computer-readable format so as to execute, on a computer, communication processing for a communication apparatus including a first radio communication section that performs radio communication in accordance with a first communication mode, and a second radio communication section that performs radio communication in accordance with a second communication mode using a frequency band higher than the first communication mode, the computer causing the computer to function as:
a power calculating section that calculates a received power when receiving a beam training signal transmitted from a transmitting end including a plurality of transmit beam patterns in the second communication mode, the beam training signal separably including a plurality of training signal sequences for each of the transmit beam patterns;
a determining section that determines feedback information for identifying an optimal transmit beam pattern at the transmitting end, on a basis of transition of the received power of the beam training signal; and
a notification signal transmitting section that transmits a notification signal including the feedback information from the first radio communication section to the transmitting end in accordance with the first communication mode.

10. A communication system comprising:
a transmitting-end communication apparatus for a second communication mode, including a first radio communication section that performs radio communication in accordance with a first communication mode, and a second radio communication section including a plurality of transmit beam patterns and capable of performing directional radio communication in accordance with the second communication mode using a frequency band higher than the first communication mode; and
a receiving-end communication apparatus for the second communication mode, including a first radio communication section that performs radio communication in accordance with the first communication mode, and a second radio communication section that performs radio communication in accordance with the second communication mode using the frequency band higher than the first communication mode,
wherein the transmitting-end communication apparatus transmits an instruction signal instructing training of a beam directivity in accordance with the first communication mode, and transmits a beam training signal in accordance with the second communication mode, the beam training signal separably including a plurality of training signal sequences for each of the transmit beam patterns, and
the receiving-end communication apparatus starts reception of the beam training signal at a reception start timing that is determined on a basis of reception of the instruction signal, calculates a received power of the beam training signal, determines feedback information for identifying an optimal transmit beam pattern at the transmitting-end communication apparatus on a basis of transition of the received power, and transmits a notification signal including the feedback information to the transmitting end in accordance with the first communication mode.
